(19) Europäisches Patentamt
European Patent Office
Office européen des brevets

(11) **EP 2 506 552 A1**

(12) **EUROPEAN PATENT APPLICATION**

(43) Date of publication:
**03.10.2012 Bulletin 2012/40**

(51) Int Cl.:
*H04N 1/00* (2006.01)     *G06T 5/00* (2006.01)

(21) Application number: **12162314.4**

(22) Date of filing: **30.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2011 JP 2011078900**
**21.12.2011 JP 2011280552**

(71) Applicant: **CASIO COMPUTER CO., LTD.**
**Shibuya-ku,**
**Tokyo 151-8543 (JP)**

(72) Inventors:
• **Kumazaki, Genki**
**Hamura-shi, Tokyo 205-8555 (JP)**
• **Sakata, Masaru**
**Hamura-shi, Tokyo 205-8555 (JP)**

(74) Representative: **Grünecker, Kinkeldey,**
**Stockmair & Schwanhäusser**
**Leopoldstrasse 4**
**80802 München (DE)**

(54) **Image processing apparatus, image processing method, and storage medium**

(57)     An image processing apparatus (11) connectable to a terminal through a network, includes a receiver (40) configured to receive original image data uploaded from the terminal, an image processor (302) configured to change a tone of the original image data, a transmitter (40) which transmits tone-changed image data output from the image processor (302) to the terminal, and a face detector (314) configured to detect a face region in the original image data received by the receiver (40), wherein the image processor (302) is configured to perform a first tone-change for image data of the face region in the original image data, and perform a second tone-change for image data of another region in the original image data.

**FIG.5**

**Description**

The present invention relates to an image processing apparatus, an image processing method, and a storage medium, which process a photographic image including a person, with varied conversion degree of a face region of the person, when the photographic image is converted into a painting image.

In recent years, people have enjoyed photographs in increasingly various ways, with spread of digital cameras. In particular, since image data of digital cameras are digital image data, various image processing can be performed.

For example, a technique of generating and displaying an image featuring a different tone (such as a painting image) based on an original photograph, by adding image processing to the original photograph, has been proposed (for example, see Jpn. Pat. Appln. KOKAI Publication No. 8-44867).

By developing the technique of Jpn. Pat. Appln. KOKAI Publication No. 8-44867, it has been proposed to extract characteristics such as color information and stroke information from an image of a picture which is actually drawn by a painter, providing a taken photograph with the extracted characteristics, and thereby converting the photograph into an artistic painting image in consideration of the whole original image (for example, see Jpn. Pat. Appln. KOKAI Publication No. 2004-213598).

Besides, a technique of converting the photograph by changing the image tone such as pictorial tone has been proposed (for example, see Jpn. Pat. Appln. KOKOU Publication No. 1-46905).

In addition, it has been proposed to perform tone change such as pictorial tone in a network service site, to which a terminal can be connected through the Internet (for example, see Jpn. Pat. Appln. KOKAI Publication No. 2011-243187).

However, when a photograph is converted into a painting image, photographs of scenery, flowers, and buildings can be artistic even when they are subjected to bold tone change. Photographs of human faces, however, have the problem of having unnatural appearance when they are subjected to extreme change.

In addition, image data which are subjected to tone change have the problem that unnaturalness of the human faces becomes more conspicuous in the printed image data.

An object of the present invention is to provide an image processing apparatus, an image processing method and a storage medium, in which a region of a human face is detected and different tone changes are performed for the face region and other regions, and thereby human faces can be expressed with natural impression.

According to one embodiment of the present invention, an image processing apparatus connectable to a terminal through a network, includes a receiver configured to receive original image data uploaded from the terminal; an image processor configured to change a tone of the original image data; a transmitter which transmits tone-changed image data output from the image processor to the terminal; and a face detector configured to detect a face region in the original image data received by the receiver, wherein the image processor is configured to perform a first tone-change for image data of the face region in the original image data, and perform a second tone-change for image data of another region in the original image data.

According to another embodiment of the present invention, an image processing apparatus includes a designating module configured to designate a tone; an image processor which converts a tone of original image data into the tone designated by the designating module; and a face detector configured to detect a face region in the original image data, wherein the image processor is configured to perform a first tone-change for image data of the face region in the original image data, and perform a second tone-change for image data of another region in the original image data.

According to the present invention, when a photograph image including a person is converted into an image of a predetermined tone such as a painting tone, unnaturalness of the whole image is removed, and tone conversion which expresses human faces naturally can be realized.

The invention can be more fully understood from the following detailed description when taken in conjunction with the accompanying drawings, in which:

FIG. 1 is a block diagram illustrating a configuration of a network system of an image processing system according to an embodiment of the present invention.

FIG. 2 is a diagram illustrating an example of a terminal according to the embodiment.

FIG. 3 is a functional block diagram illustrating a schematic structure of the terminal according to the embodiment.

FIG. 4 is a diagram illustrating a tone selection menu of the terminal according to the embodiment.

FIG. 5 is a block diagram illustrating a schematic structure of a server according to the embodiment.

FIG. 6 is a diagram illustrating attribute information of a user ID according to the embodiment.

FIG. 7 is a diagram illustrating attribute information of an image ID according to the embodiment.

FIG. 8 is a process diagram illustrating exchange of data between the terminal and the server according to the embodiment.

FIG. 9 is a flowchart for explaining image converting processing according to the embodiment.

FIGS. 10A, 10B, 10C, 10D, and 10E are diagrams for explaining fineness in the image converting processing.

FIGS. 11A and 11B are diagrams for explaining a shape of a stroke in the image converting processing.

FIG. 12 is a flowchart for explaining face detection processing according to the embodiment.

FIG. 13 is a diagram for explaining face region creation according to the embodiment.

FIGS. 14A and 14B are diagrams for explaining a face region map.

FIGS. 15A, 15B, 15C, and 15D are diagrams for explaining image conversion using the face region map.

FIG. 16 is a diagram for explaining a boundary of the face region.

FIG. 17 is a flowchart for explaining download of an artwork in the embodiment.

The embodiments of the present invention will be described below with reference to drawings.

(First embodiment)

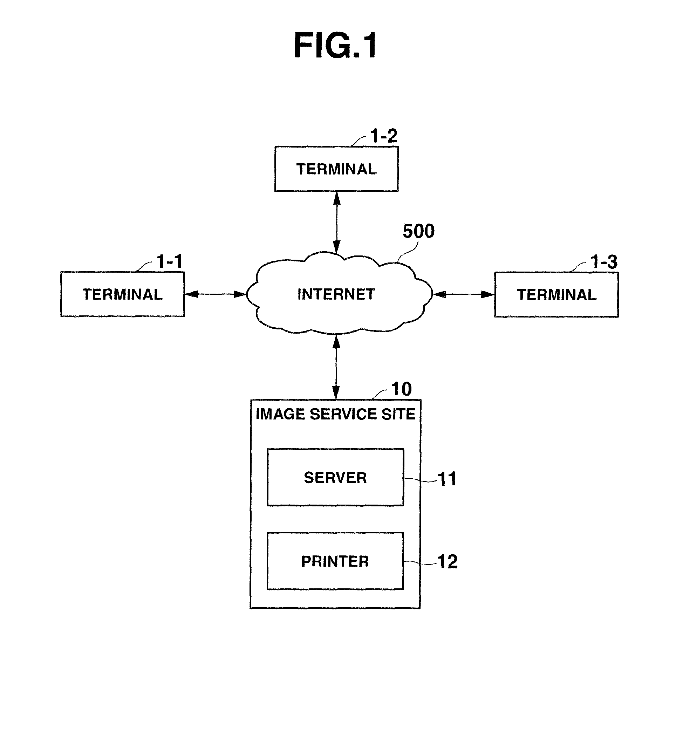

FIG. 1 is a block diagram showing the configuration of a network of an image processing system according to an embodiment of the present invention.

An image service site 10 with a social network service function is connected to terminals 1-1, 1-2, 1-3, ... via a network such as the Internet 500. The image service site 10 includes a server 11 which stores image data (mainly image data of a photo shot by a digital camera) uploaded from a user via the terminals 1-1, 1-2, 1-3, ..., converts the uploaded image into painting image, and also allows other users to browse the uploaded image and the converted painting image.

The image service site 10 further includes a printer 12 which prints the converted painting image on a print medium in response to a request from the user. The printer 12 may not be located in the image service site 10, but be located in other sites which provide a print service.

The terminals 1-1, 1-2, 1-3, ... may be an ordinary personal computer or mobile phone which has a communication function or an image display function.

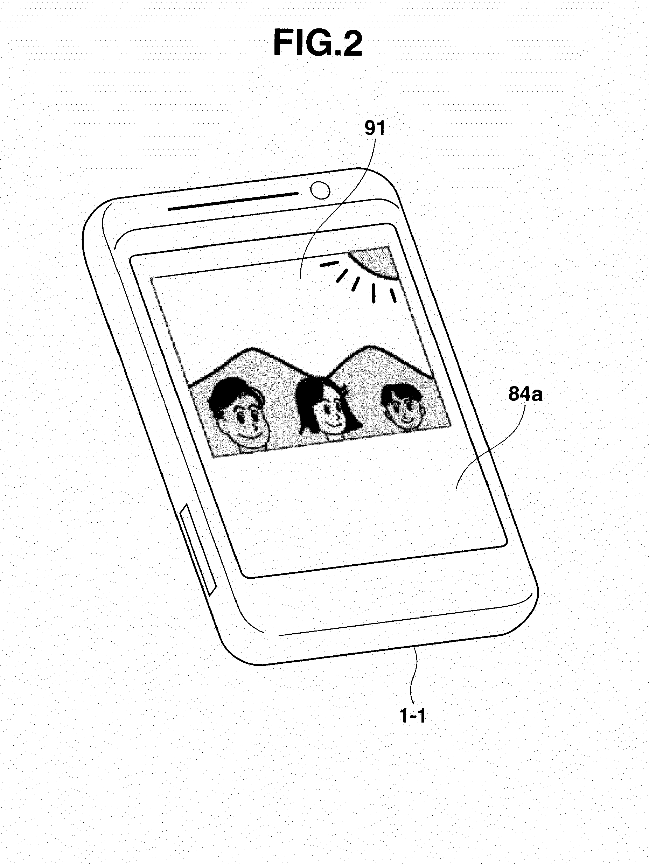

FIG. 2 is a diagram illustrating an example of the terminal 1-1 which can access the image service site 10, more specifically, a smart phone which is a so-called multi-function mobile phone terminal. As illustrated in FIG. 2, the terminal 1-1 includes a comparatively large display screen 84a, which can display a desired image 91.

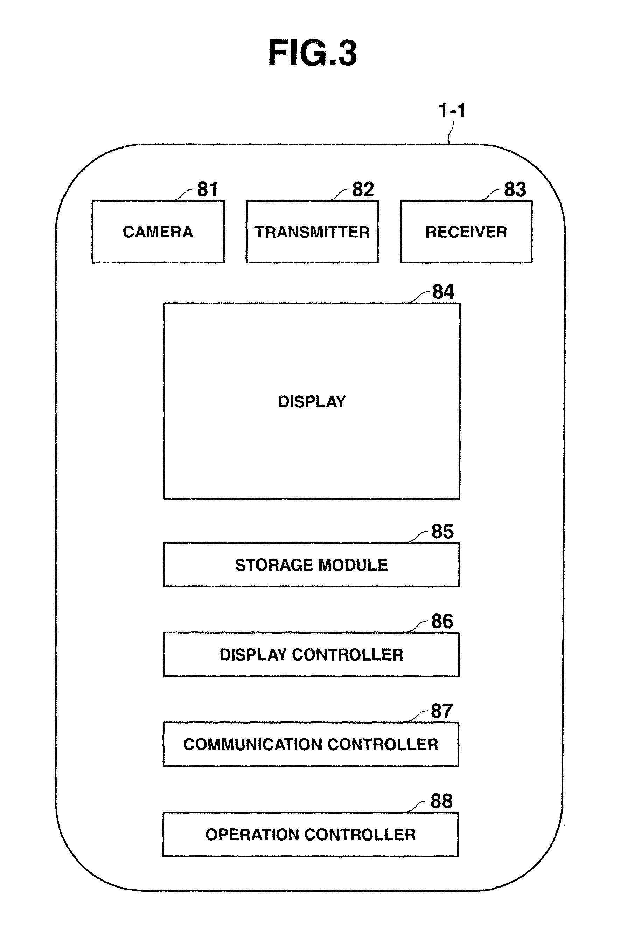

FIG. 3 is a functional block diagram illustrating a schematic structure of the terminal 1-1. A camera 81 which is not shown in FIG. 2 is provided on a back surface of the terminal 1-1. The camera 81 functions to shoot a desired subject and obtain image data thereof.

A transmitter 82 functions to upload image data of a photograph taken by the camera 81 onto the server 11 when necessary.

A receiver 83 functions to receive control data which is transmitted from the server 11, and painting image data which is obtained by image converting processing performed by the server 11.

A display 84 functions to display an image taken by the camera 81, or a painting image based on painting image data that is downloaded from the server 11 by the receiver 83, on the display screen 84a illustrated in FIG. 2. The display screen 84a also functions as a touch panel, and displays various operation menus.

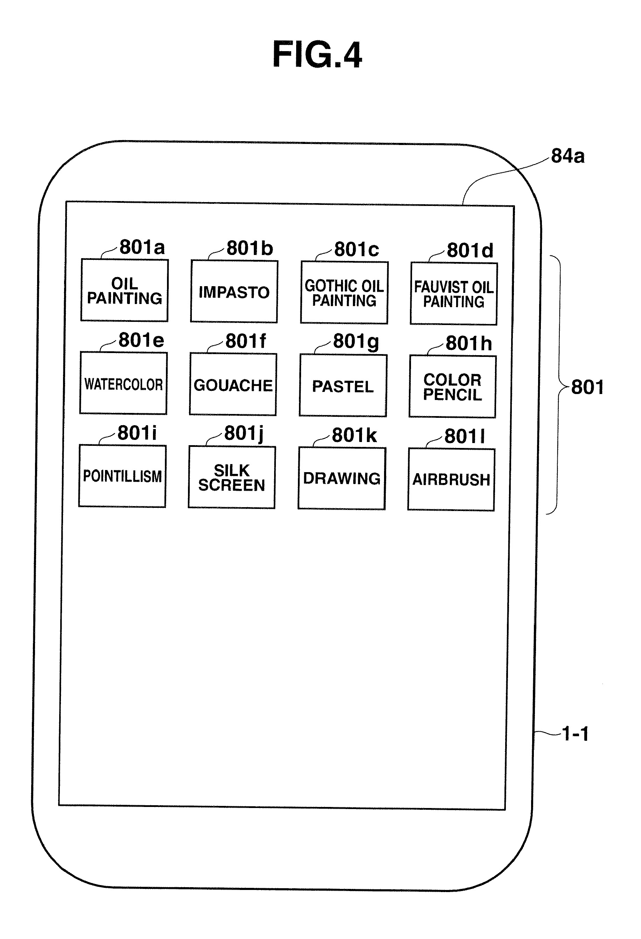

The operation menus include a tone selection menu 801, in which a plurality of tone selection buttons 801a, 801b, 801c, ... are arranged to enable the user to select a desired tone, as illustrated in FIG. 4.

A storage module 85 mainly functions to store image data of images taken by the camera 81, and painting image data that is downloaded from the server 11.

A display controller 86 functions to cause the display 84 to display an image or an operation menu, in accordance with a predetermined display control program.

A communication controller 87 functions to cause the transmitter 82 and the receiver 83 to perform data communication such as upload and download of image data, in accordance with a predetermined communication program.

An operation controller 88 functions to detect a touch position of the display screen 84a (touch panel) by the user, specify the instruction of the user, and supply the specified instruction to the display controller 86 and/or the communication controller 87.

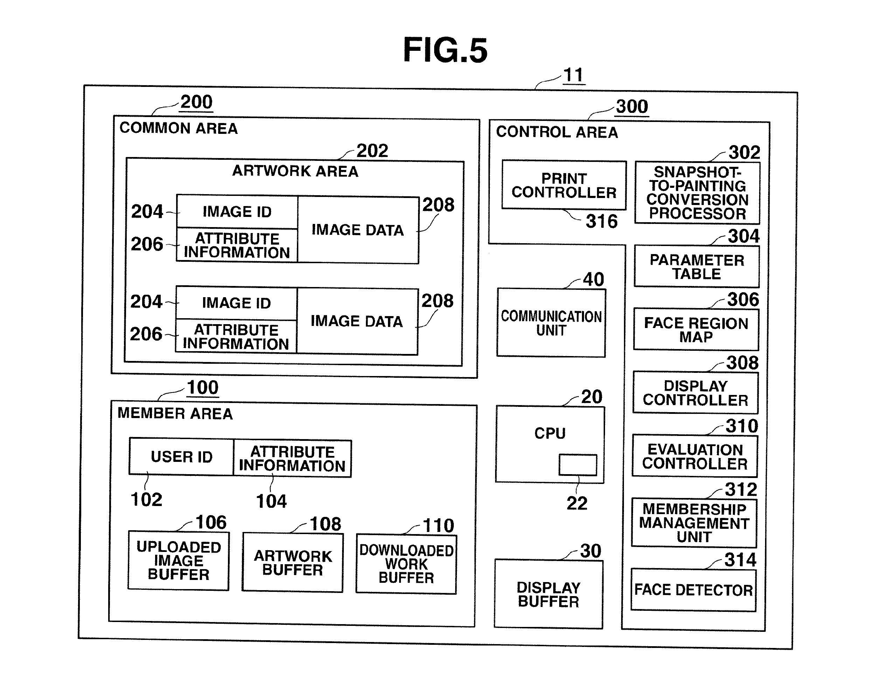

FIG. 5 is a block diagram showing principal portions in the configuration of the server 11 included the image service site 10. The server 11 is provided with a member area 100, a common area 200, and a control area 300.

The member area 100 is an area provided for each registered member and stores a user ID 102 to identify each member and various kinds of attribute information 104 for each user corresponding thereto.

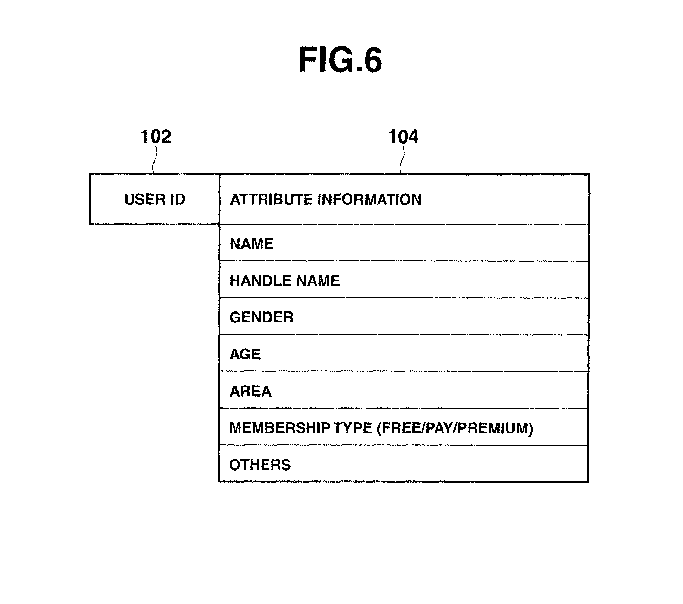

The attribute information 104 is, as shown in FIG. 6, user-specific information including the name, handle name, gender, age, region, membership type, and others. The membership type includes a free member registered without charge, a pay member registered on a chargeable basis, and a premium member who pays a special membership fee (for example, an annual membership fee).

The member area 100 includes an uploaded image memory 106 which stores image data of photos uploaded by the user, an artwork memory 108 which stores painting images (artworks) obtained through snapshot-to-painting conversion by the server 11, and a downloaded artwork memory 110 which stores artworks of other users downloaded from the other users.

The common area 200 is an area provided commonly to all users and includes an artwork area 202 which stores many artworks obtained by snapshot-to-painting conversion of images uploaded by the users.

Each artwork stored in the artwork area 202 has image data 208 stored together with an image ID 204 to identify the artwork and attribute information 206 of the artwork.

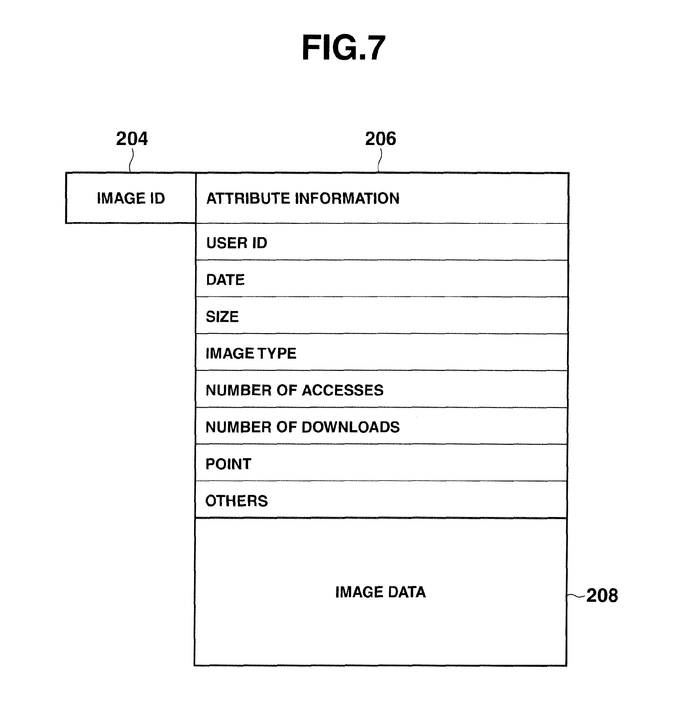

The attribute information 206 includes, as shown in FIG. 7, the user ID indicating a contributor of the artwork, date information such as the creation date or posting date, size of image data, image type information such as the type of painting tone, access count information indicating the number of times the artwork is browsed, download count information indicating the number of times the artwork is downloaded, point information indicating evaluation of the artwork, and other information specific to artworks. The creator of the artwork is known from the user ID and whether the creator is a pay member or premium member can be identified.

In the present embodiment, artworks are not displayed uniformly and instead, the display manner can be changed based on the "value" thereof. Examples of the value include the point number, which is attribute information attached to each artwork, access count, and download count, and the membership type of the creator of each artwork.

The control area 300 includes a snapshot-to-painting conversion processor 302, a parameter table 304, a face region map 306, a display controller 308, an evaluation controller 310, a membership management unit 312, a face detector 314, and a print controller 316.

The snapshot-to-painting conversion processor 302 performs snapshot-to-painting conversion processing that converts image data stored in the artwork memory 108 into painting image data. The face detector 314 detects a face region of an arbitrary person in the image data stored in the artwork memory 108. The parameter table 304 stores parameters for snapshot-to-painting conversion referenced by the snapshot-to-painting conversion processor 302 to perform the snapshot-to-painting conversion processing. The face region map 306 stores data indicating a face region in the image and for snapshot-to-painting conversion referenced by the snapshot-to-painting conversion processor 302 to perform the snapshot-to-painting conversion processing. The display controller 308 stores a control program that causes a screen of the terminals 1-1, 1-2, 1-3, ... to display artworks.

The evaluation controller 310 evaluates artworks stored in the artwork memory 108 of the member area 100 based on the access count or the like and attaches a point to each artwork. The membership management unit 312 manages members based on the user ID and controls services separately for free members, pay members, and premium members. The membership management unit 312 also administers the social network service function of the server 11. The print controller 316 performs a print operation for an artwork by the printer 12.

The server 11 is provided with a CPU 20, a display buffer 30, and a communication unit 40. The CPU 20 controls the whole server 11 (each unit described above) and also performs various kinds of processing needed to display many artworks at a glance on the Internet.

The CPU 20 also performs an operation accompanied with a snapshot-to-painting conversion by the snapshot-to-painting conversion processor 302. The display buffer 30 is a work memory to generate images for the display when the CPU 20 causes a display screen to display many artworks at a glance. The communication unit 40 performs a communication processing for data transmission/reception according to an operation of the CPU 20 between the terminals 1-1, 1-2, 1-3, ....

Concrete operations of an image processing system according to the present embodiment will be described below with reference to flow charts.

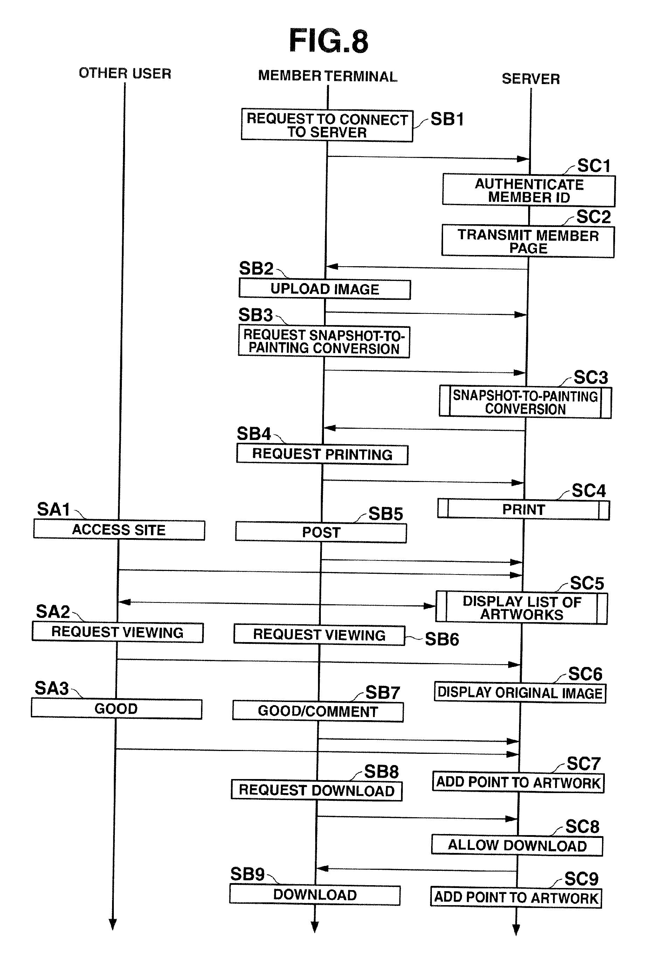

First, processes when an image is uploaded, displayed, browsed, and downloaded between the terminals 1-1, 1-2, 1-3, ... and the server 11 on the image service site 10 will be described with reference to FIG. 8.

If the user is a member (a free member, pay member, or premium member), the user accesses the server 11 from the terminal of the user (step SB1). The server 11 authenticates the user ID after the user being logged in (step SC1) and, if it is verified that the user is a member, sends a page of the member so that the user can view the page (step SC2).

When the page of the member is opened, the member uploads an image (step SB2). The uploaded image is received by the receiver 40 and stored in the uploaded image memory 106 of the member area 100 of the server. If the member request a snapshot-to-painting conversion of the image (step SB3), the server 11 performs the snapshot-to-painting conversion processing (or image converting processing) (step SC3) and the converted image, that is, the artwork is stored in the artwork memory 108.

If the user uses the terminal 1-1 shown in FIG. 2 to request the server of a snapshot-to-painting conversion at step SB3, the user performs a predetermined operation to display the tone selection menu 801 on the display of the terminal 1-1. The user can select a desired tone on the tone selection menu 801. Information indicating the selected tone is transmitted to the server 11 from the terminal 1-1 as the tone to be converted.

An artwork which is a tone-converted image obtained by the server 11 is transmitted from the server 11 to the terminal 1-1 of the user and displayed on the terminal 1-1.

If the user requests a print operation of the artwork (tone-converted image) at step SB4, the tone-converted image data stored in the artwork memory 108 is transmitted to the printer 12 from the server 11 by the communication unit 40 and is printed (SC4). At step SC4, an artwork is printed on a predetermined print medium based on the painting data (tone-converted image data). The print medium is delivered to the user by an offline manner.

The member may personally enjoy the converted artwork, but may post the artwork if the artwork is desired to be released to other users (step SB5). The posted artwork is transferred from the artwork memory 108 of the member area 100 to the artwork area 202 of the common area 200 and stored there. Incidentally, the attribute information 206 as described with reference to FIG. 7 is attached each artwork in the artwork area 202.

The server 11 displays artworks in the artwork area 202 at a glance if necessary (step SC5). Incidentally, the server 11 resizes artworks in the artwork area 202 when displaying artworks at a glance if appropriate. That is, because the size of artworks in the artwork area 202 is normally larger than the image size for display at a glance, the artworks are reduced and if the size of artworks in the artwork area 202 is smaller than the image size for display at a glance, the artworks are enlarged.

The member can browse any artwork displayed at a glance in an actual size by making a request of browsing (step SB6). If a browsing request is made, the server 11 displays the requested artwork in the original size (step SC6) and also adds up a point to the artwork whose browsing is requested (step SC7).

The member may press a GOOD button displayed in the page of the member and indicating that the browsed artwork suits his (her) taste or write a comment such as his (her) impressions (step SB7). If the GOOD button is pressed or a comment such as impressions is written, the server 11 adds up a point to the browsed artwork (step SC7). The evaluation of the artwork is thereby raised. It is assumed that the point number of comment writing is higher than the point number of the GOOD button.

The member can also request a download of a browsed artwork (step SB8). If a download request is made by a member, the server 11 permits the download if necessary (step SC8) and the member can download a browsed artwork only if the download is permitted (step SB9). The downloaded artwork is stored in the downloaded artwork memory 110 of the member area 100.

If a download request is made, the server 11 also adds up a point to the artwork (step SC9).

On the other hand, other users other than members, that is, any user can browse artwork stored in the artwork area 202 of the common area 200 in a state of the display at a glance by appropriately accessing the server 11 (step SA1). Further, any user can also browse any artwork displayed at a glance in the actual size by making a request of browsing (step SA2).

Then, if any user presses the GOOD button because the browsed artworks suits his (her) taste (step SA3), the server 11 also adds up a point to the browsed artwork (step SC7).

Next, the technology of snapshot-to-painting conversion processing when the server 11 converts uploaded image data into a painting image will be described.

The snapshot-to-painting conversion is an image processing technology to convert each pixel constituting an original image such as a photo to an artwork according to predetermined parameters (snapshot-to-painting conversion parameters). The artwork includes an oil painting, an impasto, a gothic oil painting, a fauvist oil painting, a watercolor, a gouache, a pastel, a color pencil, a pointillism, a silk screen, a drawing, and an airbrush. These tones are called a style of paintings.

The technology of snapshot-to-painting conversion image processing converts an original image to an image looking like a painting basically by automatically adjusting/combining parameters of various kinds of effect processing known as photo retouch software.

Effect processing includes, for example, texture processing that provides a special texture by mapping the texture to an image and resolution processing that increases the texture and resolution by dividing an image into a contour portion, a texture portion such as a fine pattern, and a flat portion and performing appropriate processing on each portion. The effect processing also includes HSV processing that adjusts the color by dividing the color into three elements of the hue, saturation, and value, RGB processing that adjusts the degree of each color of R(red), G(green), and B(blue), and RGB substitution processing that makes a substitution in the direction of R to G, G to B, and B to R. The effect processing also includes an edge extraction processing that applies a filter called a Laplacian filter and an intermediate density extraction processing that applies a filter called a median filter. The effect processing also includes a density extraction processing that performs processing when a histogram in RGB of adjacent pixels is extracted to extract minimum/intermediate/maximum densities, an equalize processing that corrects the contrast or enlarges an image's histogram by setting the darkest portion of an image as black, the brightest portion as white, and appropriately distributing a histogram therebetween, a gamma correction processing that adjusts an intermediate brightness while maintaining a bright portion and a dark portion, and a shadow processing that brightens a dark portion of an image or darkens a bright portion thereof. The effect processing also includes a solarization processing that when the RGB value of each pixel is brighter than a threshold, inverts the RGB value thereof and a noise addition processing that adjusts the quantity and color of noise by randomly drawing dots to cause noise.

The effect processing also includes an effect processing called HDR (High Dynamic Range) in which a photo with a wide dynamic range that cannot be expressed by an ordinary photo is compressed into a narrow dynamic range width through tone mapping to correct whiteout due to overexposure and black crushing due to underexposure so that power of expression is increased. By applying this effect processing, an image realizing a new photo expression that brings a photo closer to memories or impressions a person's brain has received and adds an artistic expression can be obtained.

That is, the snapshot-to-painting conversion processing is in principle a kind of effect processing and a snapshot-to-painting conversion algorithm creates various kinds of painting tone by appropriately combining effect processing and parameters and is programmed as the snapshot-to-painting conversion processing.

In the conversion algorithm, a parameter group P, which is a set of the parameters to convert pixels of an original image, is prepared in advance. If there are 12 kinds of painting tones, parameter groups are represented as P1 to P12. How to determine parameters also changes the tone of a converted image. If the parameter group for the conversion into an oil painting tone is P1 and there are m parameters in P1 needed for effect processing to convert an image so as to look like a painting tone image, the parameter group P1 contains a plurality of parameters $P1_1$ to $P1_m$.

Generally, pixels are expressed by gradation of a plurality of bits of each of R, G and B. Parameters are elements for carrying out an operation for bit data. For example, coefficients "2", "0.9" and "0.5" which are used when an operation "R×2, Gx0.9, B×0.5" is performed to emphasize a red component and slightly suppress a green component and a blue component are parameters.

As another example, emphasis degrees which are used in the case where operation elements are programmed in advance and an operation "R×1.1" is performed when the emphasis degree of red is 1, an operation "R×1.2" is performed when the emphasis degree of red is 2, and an operation "Rx1.3" is performed when the emphasis degree of red is 3 are also parameters.

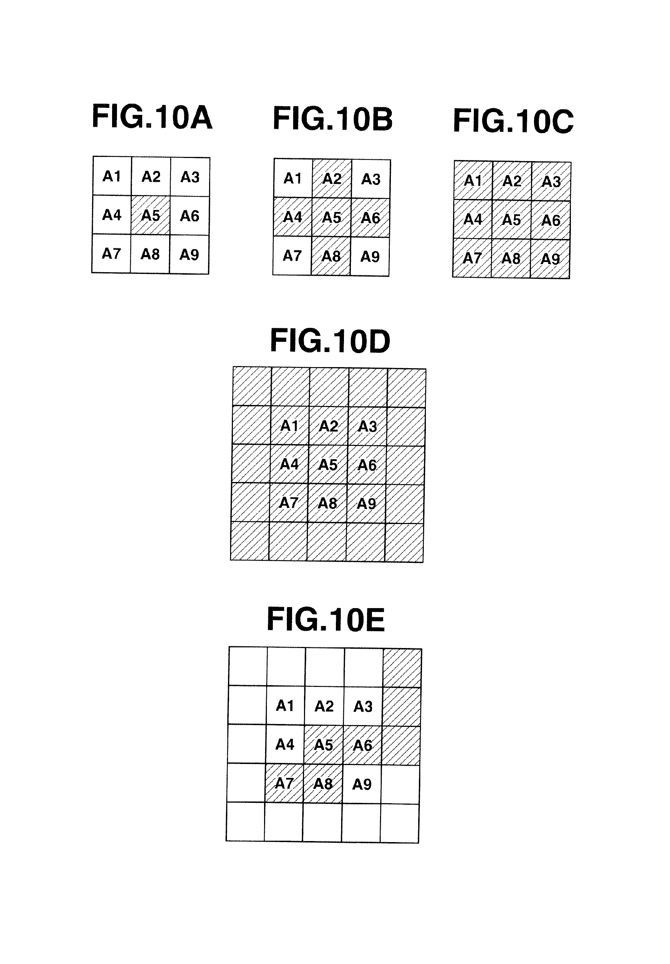

In addition, there are cases where a predetermined operation is performed between a target pixel and adjacent pixels. For example, as illustrated in FIG. 10A, when a target pixel A5 (RGB) is located in the center and pixels A1 (RGB), A2 (RGB), A3 (RGB), A4 (RGB), A5 (RGB), A6 (RGB), A7 (RGB), A8 (RGB), and A9 (RGB) are arranged above, under, on the left, and on the right of the target pixel A5, an operation "A5 (R) =A1 (R) ×q1+A2 (R) ×q2 +A3 (R) ×q3+A4 (R) ×q4+A5 (R) ×q5+A6 (R)× q6+A7 (R) ×q7+A8 (R) ×q8+A9 (R) ×q9" is performed for A5(R), and the same operation is performed for G and B. The element "q" in the operation is a parameter, and different effect processing can be performed by changing the value (coefficient).

In addition, there is effect processing to process the image to change the touch.

Specifically, pixels which closely correlate with each other based on colors are collected from pixels which form the image data, and grouped. Then, for pixels of each of the groups, the colors of pixels which belong to the same group are replaced by a representative color of the group. The group of pixels, colors of which are replaced by the representative color, forms each touch. According to the image processing described above, a touch which is formed can be changed, by changing correlation between pixels collected as a group and changing the shape (length (distance), flatness) of the group formed of pixels of the same color (representative color). As a result, it is possible to change the tone of the image indicated by the image data to various pictorial tones. In addition, an optimum combination of parameters such as correlation used for each processing, and the length and flatness which indicate the shape of the group is set for each tone.

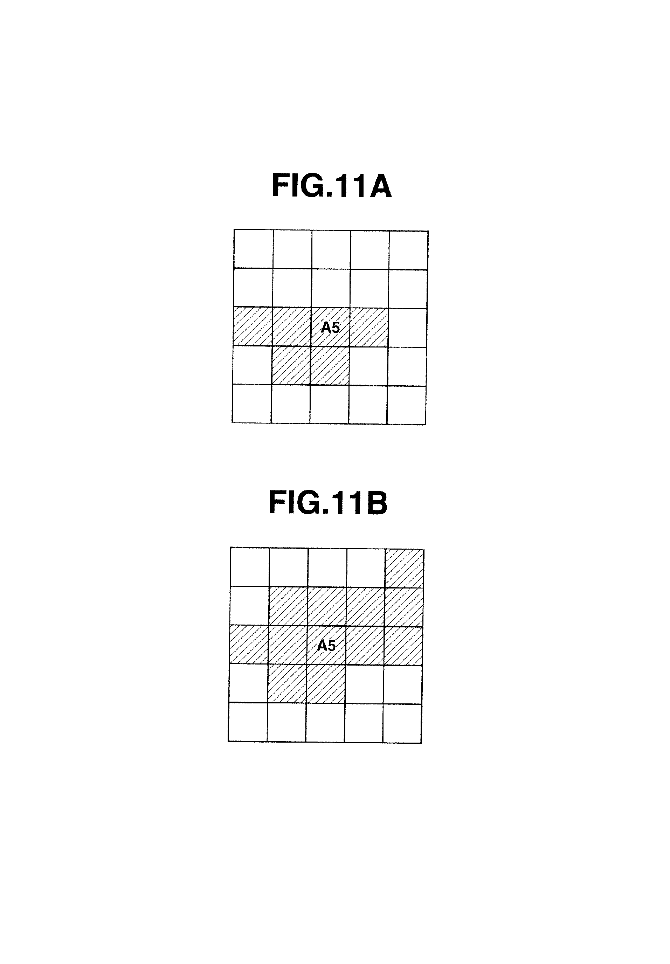

For example, when the shape of the group formed of pixels which closely correlate with the target pixel A5 is the shape illustrated in FIG. 11A or FIG. 11B, the shape illustrated in FIG. 11A has larger flatness and shorter length (distance) than those of the shape illustrated in FIG. 11B.

Changing each of a plurality of image data items into different touches can be realized by controlling the shape of each group obtained by collecting pixels forming a touch, for example, controlling the flatness of the group, when the tone is changed. The touch is thickened when the flatness of the group formed of pixels of the same color which indicates the touch is increased, and consequently the touch of the image is displayed in a coarse manner. A small touch can be formed by decreasing the flatness of the group formed of pixels of the same color, and consequently the touch of the image is displayed in a fine manner.

The snapshot-to-painting conversion algorithm detailed above is stored in the snapshot-to-painting conversion processor 302 in the control area 300 of the server 11. The parameters are also stored in the parameter table 304 of the control area 300.

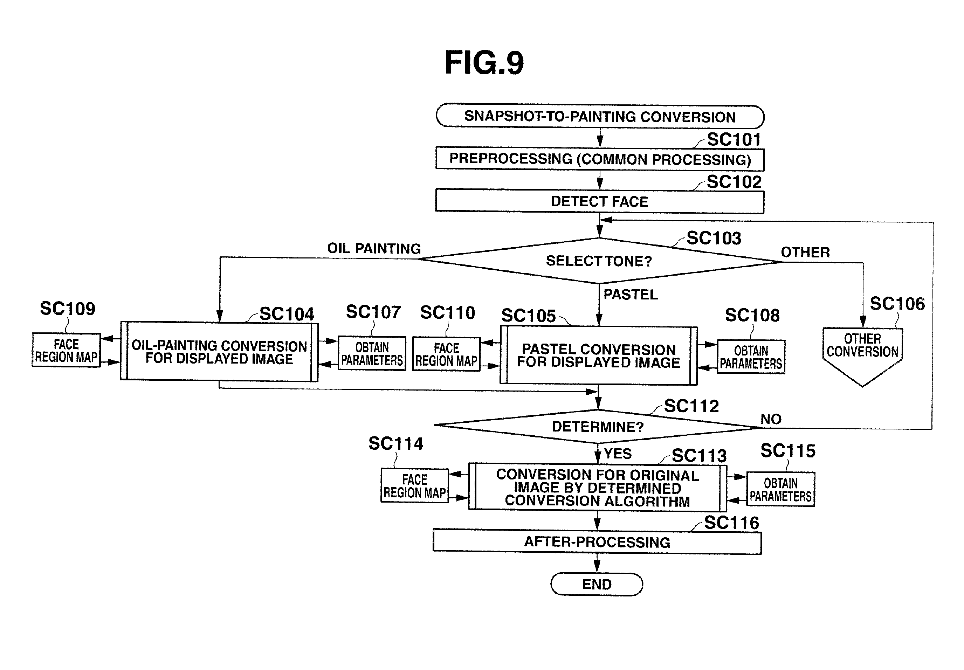

FIG. 9 is a flowchart illustrating the snapshot-to-painting conversion processing performed by the snapshot-to-painting conversion processor 302. In the server 11, the snapshot-to-painting conversion processor 302 performs preprocessing, as illustrated in FIG. 6 (Step SC101). This is processing which is performed in common, regardless of the type of the tone.

The effect processing described above is performed for each pixel, and thus it is necessary that the image data is in the bit map form. Therefore, the snapshot-to-painting conversion processor 302 converts the image data, which is generally expressed in JPEG, into the bit map form.

In addition, since the image data items which are uploaded from the terminals 1-1, 1-2, 1-3... have various sizes, the snapshot-to-painting conversion processor 302 resizes the image data items to the number of pixels of the display area, for example, 800x600 pixels. Images of a larger size are reduced, and images of a smaller size are enlarged. This is because fixed parameters can be used for images of a fixed size, and thus the processing can be performed efficiently. As a matter of course, snapshot-to-painting conversion is performed for the image having the size of the uploaded image data, in snapshot-to-painting conversion described later.

Next, the snapshot-to-painting conversion processor 302 checks by face detection processing whether the image to be converted includes a face or not (Step SC102). This is performed to subject a face region of the image to snapshot-to-painting conversion which is different from snapshot-to-painting conversion for other parts, since the face region which is subjected to extreme conversion becomes unnatural. More specifically, the face region should be subjected to snapshot-to-painting conversion processing with conversion intensity lower than that for the other parts, or more detailed snapshot-to-painting conversion processing than that for the other parts. Basically, this is checked to subject the image to be converted to snapshot-to-painting conversion processing such that the face region in the converted image is closer to that in the original image to be converted than the other parts are.

The term "detailed" means that the group of pixels which are subjected to effect processing is reduced. For example, in the case of smoothing or airbrushing, a group is formed between pixels adjacent to the target pixel A (x, y), an average of the pixels is obtained, values of the pixels in the group are replaced by the average value, and thereby smoothing or airbrushing is performed. For example, when pixels A1, A2, A3, A4, (A5), A6, A7, A8, and A9 are adjacent to the target pixel A5 serving as the center, suppose that grouping four pixels of A2, A4, A6, and A8 located above, under, on the left and on the right of the pixel A5 (see FIG. 10B) is more detailed than grouping eight pixels of A1 to A9 around the pixel A5 (see FIG. 10C) and grouping 24 pixels also including pixels around the eight pixels (see FIG. 10D) (the opposite of "detailed" is "coarse").

According to the type of the tone, a group of an irregular shape may be formed as illustrated in FIG. 10E. Also in this case, suppose that subjecting a smaller group to snapshot-to-painting conversion for each smaller number of pixels is more detailed than subjecting a group of a large number of pixels together to snapshot-to-painting conversion.

In the same manner, also with respect to the touch, suppose that processing groups, each of which is formed of a small number of pixels as illustrated in FIG. 11A, many times is more detailed than processing groups, each of which is formed of a large number of pixels as illustrated in FIG. 11B, few times.

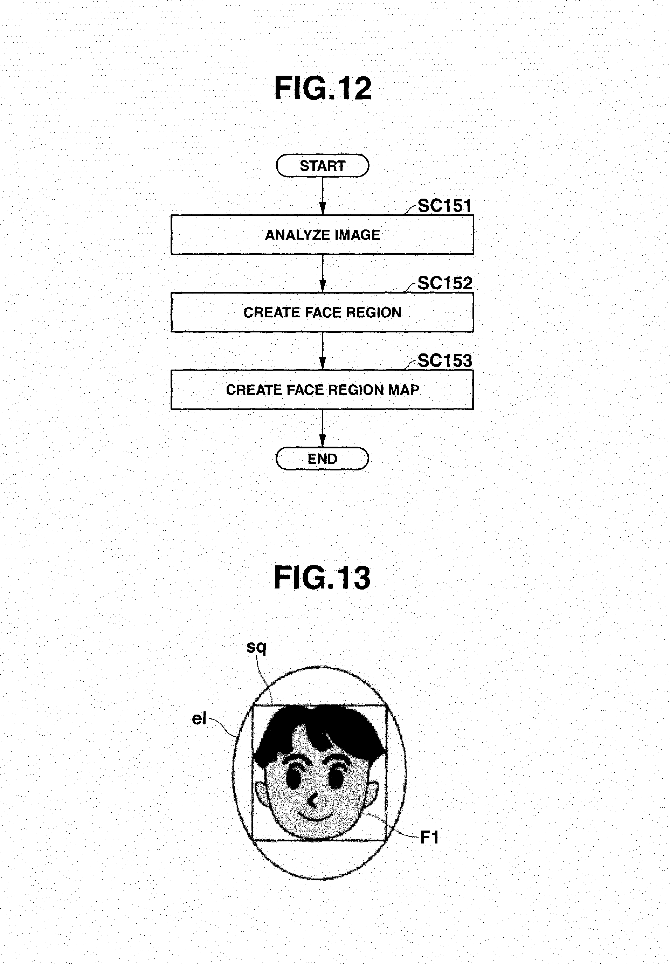

In the face detection processing, as will be described later by using the flow chart in FIG. 12, importance changes even in an image between a face region and the background or between a center portion and a peripheral portion and thus, the snapshot-to-painting conversion processor 302 creates a face region map indicating a face region of a person in the object image and stores it into the face region map 306 in the control area 200.

Subsequently, the snapshot-to-painting conversion processor 302 causes the user to select the desired painting tone from the oil painting, impasto, gothic oil painting, fauvist oil painting, watercolor, gouache, pastel, color pencil, pointillism, silk screen, drawing, and airbrush. (step SC103).

If the painting tone is selected, the snapshot-to-painting conversion processor 302 proceeds to the flow of each painting tone conversion algorithm. If, for example, the oil painting tone is selected, the snapshot-to-painting conversion processor 302 proceeds to step SC104 and if the watercolor painting tone is selected, the snapshot-to-painting conversion processor 302 proceeds to step SC105. Otherwise, the snapshot-to-painting conversion processor 302 proceeds to the flow of other painting tone conversion algorithms (step SC106). Incidentally, when executing each algorithm, the snapshot-to-painting conversion processor 302 references the parameter table 304 and the importance map 306 of the control area 300 (steps SC107, SC108, SC109, SC110).

In the processing in steps SC104, SC105, SC106, the snapshot-to-painting conversion processor 302 makes a snapshot-to-painting conversion intended for image data of the display screen size. If a decision is instructed from the terminal 1-1 of the user (step SC112: YES), proceeds to the snapshot-to-painting conversion of the original image (step SC113) and, if redoing in another painting tone is instructed (step SC112: NO), returns to the processing in step SC103.

For the snapshot-to-painting conversion of the original image in step SC113, the snapshot-to-painting conversion processor 302 performs painting tone conversion processing on the original image based on the painting tone conversion algorithm determined in step SC112 while referencing the parameter table 304 and the importance map 306 (steps SC114, SC115). If the image sizes are different, appropriate parameters are different even if the painting tone is the same and thus, the parameter table used in step SC115 is different from parameters used in step SC107 or SC108.

Then, the snapshot-to-painting conversion processor 302 performs post-processing to convert the converted original image back to the JPEG format (step SC116).

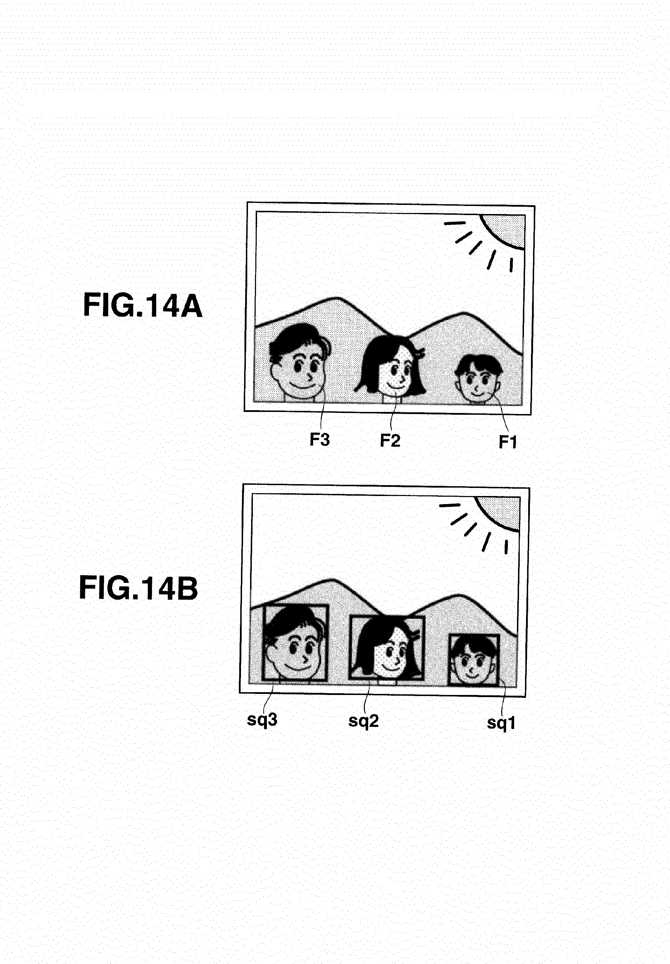

Next, the face detection processing in step SC102 by the snapshot-to-painting conversion processor 302 described above and a procedure for creating a face region map will be described with reference to FIGS. 12 to 14A and 14B.

In the face detection processing, as shown in FIG. 12, the snapshot-to-painting conversion processor 302 first analyzes the target image data to determine whether there is any face therein (step SC151). Any known face detection technology can be used and thus, a detailed description thereof is omitted.

In the face detection processing, even if a face is detected, it is difficult to accurately extract the contour thereof and thus, the snapshot-to-painting conversion processor 302 sets an elliptic or rectangular region containing a face region to the image data (step SC152).

FIG. 13 is a diagram illustrating a region containing a face region. A rectangular region "sq" contains a face F1 and an elliptic region "el" contains the face F1. Thus, the regions "sq" and "el" correspond to the detected face regions. The rectangular region "sq" contains the detected face and the elliptic region "el" contains the rectangular region "sq".

Then, the snapshot-to-painting conversion processor 302 creates a face region map (step SC153). FIGS. 14A and 14B are diagrams illustrating the face region map. In the processing in step SC153, if the snapshot-to-painting conversion processor 302 detects faces F1, F2, F3 from image data as shown in FIG. 14A, the snapshot-to-painting conversion processor 302 sets face regions sq1, sq2, sq3 as shown in FIG. 14B to the image data. That is, the snapshot-to-painting conversion processor 302 stores data indicating the face regions sq1, sq2, sq3 into the face region map 306 in the control area 300.

Then, when performing snapshot-to-painting conversion processing on each pixel of image data at steps SC104, SC105, SC 106, or SC113, the snapshot-to-painting conversion processor 302 sets low conversion intensity for the face regions, and sets high conversion intensity for the background region excluding the face regions to perform snapshot-to-painting conversion, or perform more detailed snapshot-to-painting conversion for the face regions than that for the background region, based on the face region map illustrated in FIG. 14B.

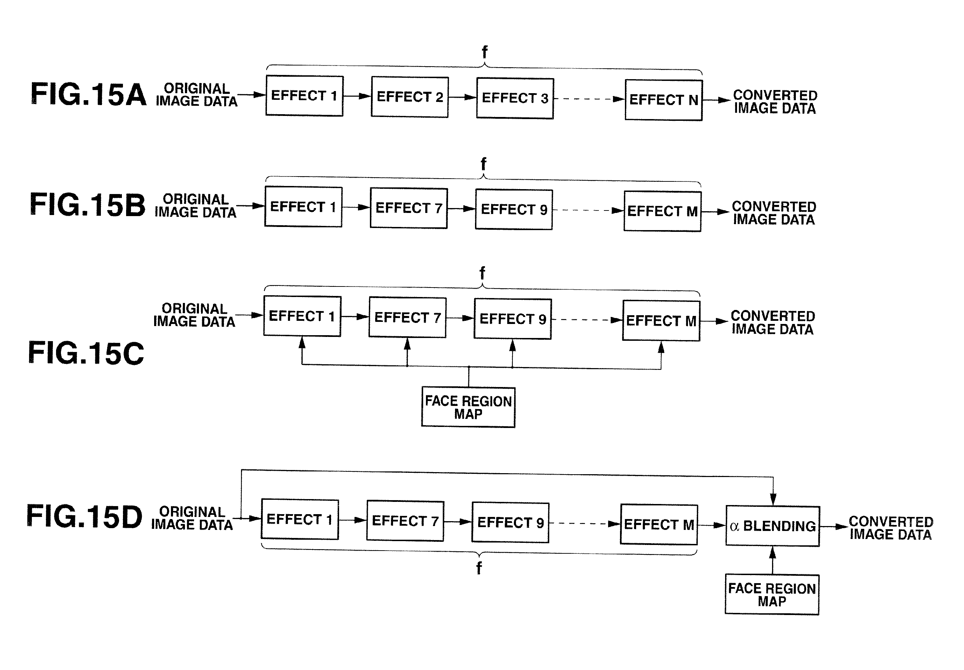

Since many effect processing, which vary according to the type of the tone, are performed in the snapshot-to-painting conversion (see FIGS. 15A to 15D), low or detailed conversion intensity is set for each conversion processing. Performing the snapshot-to-painting conversion together results in performing the snapshot-to-painting conversion by setting low conversion intensity for the face regions, and setting high conversion intensity for the background region excluding the face regions, and performing more detailed snapshot-to-painting conversion for the face regions than that for the background region. Therefore, the processing of setting the conversion intensity exists together with the processing of setting the detail degree.

As a result, in the painting image after snapshot-to-painting conversion, the face regions have a little difference from the original image, and the background region has a large difference from the original image.

Therefore, even when a human face exists in the original image, the atmosphere of the face does not deteriorate, and natural snapshot-to-painting conversion can be performed. It is an example as a matter of course, and the face regions sq1, sq2, and sq3 may not be subjected to snapshot-to-painting conversion to prevent deterioration of the atmosphere of the face.

The conversion intensity in the snapshot-to-painting conversion will be explained in detail hereinafter. The magnitude of the conversion intensity basically means the size of parameters explained above. Specifically, the magnitude of the conversion intensity means the size of parameters P1 to Pm which are necessary for the effect processing mentioned as an example above, the elements (coefficients) with which an operation is performed for bit data of each of R, G and B of each pixel, the color emphasis degree, a value (coefficient) q which is used when a predetermined operation is performed between the target pixel and adjacent pixels, and the shape (such as length and flatness) of the pixel group used when a touch is expressed. Specifically, the difference of a part of the painting image from the original image increases as the parameters increase.

Generally, conversion of an image means mapping the original image onto another image. When mapping is performed, a predetermined conversion is performed. In the conversion, a difference between the original image and the image obtained by conversion is small when a conversion coefficient (parameter) is small. When the conversion coefficient is the minimum, there is no difference between the original image and the image obtained by conversion, and the same image is obtained. When the conversion coefficient is large, a difference between the original image and the image obtained by conversion becomes conspicuous.

Conversion of an image can be indicated by the following expression, when a pixel value of the original image is A, a pixel value of an image obtained by conversion is B, and the conversion algorithm is f:

$$B = f(A)$$

The reference symbol f represents, for example, a plurality of types of effect processing, such as texture processing, HSV processing, Laplacian filtering, or median filtering. In addition, the reference symbol f represents processing of converting an image into, for example, an oil-painting tone image, or a pastel tone image.

FIG. 15A is a diagram which schematically illustrates the contents of processing of snapshot-to-painting conversion as generalization. As illustrated in FIG. 15A, the conversion algorithm actually includes individual algorithms of a plurality of types of effect processing 1 to N.

FIG. 15B is a schematic diagram which corresponds to FIG. 15A, and illustrates processing performed when a target tone is a certain tone. As illustrated in FIG. 15B, the conversion algorithm includes algorithms of specific types of effect processing 1, 7, 9,... and M which correspond to the target tone.

On the other hand, conversion of an image, which includes elements of the conversion intensity can be indicated by the following expression:

$$B = f(A, I)$$

Reference symbol I represents intensity.

For example, photo-retouch software which is generally used in personal computers can perform various image processing, intensity of which can be controlled. The intensity which is controlled in the image processing corresponds to the value of I.

The conversion algorithm f includes not only processing of maintaining the position of a pixel (x, y), but also processing of moving the position of a pixel or a group of pixels. For example, a distorted image can be obtained by moving a pixel of (x1, y1) to (x3, y4), and moving pixels around the pixel together. In this case, the conversion intensity increases as the moving distance increases. In addition, the conversion algorithm f also includes various airbrushing processing. For example, in the airbrushing processing of setting an average value of surrounding pixels for a target pixel, the conversion intensity increases as the number of surrounding pixels increases.

In the snapshot-to-painting conversion at the Steps SC104, SC105, SC106, and SC113 described above, different conversion intensities are set for the face regions shown in the face region map and the background region excluding the face region. Specifically, in snapshot-to-painting conversion, a target pixel to be processed is subjected to processing, to which a conversion intensity I that is set for the region including the target pixel is applied. Thereby, the original image is converted into a painting image, in which the face region has a little difference from that of the original image, and the background region has a large difference from that of the original image.

FIG. 15C is a diagram which corresponds to FIG. 15B and schematically illustrates the contents of processing of snapshot-to-painting conversion, to which the conversion intensity I that is set for the region including the target pixel is applied. As illustrated in FIG. 15C, in the snapshot-to-painting conversion, processing which reflects the conversion intensity I corresponding to the region shown in the face region map is performed for the target pixel, in each of a plurality of types of effect processing 1, 7, 9, ... and M. As a result, the original image is subjected to snapshot-to-painting conversion in which the conversion intensity for the face regions is different from the conversion intensity for the background region.

In short, in snapshot-to-painting conversion at steps SC104, SC105, SC106, and SC113 described above, the processing of the above expression "B=f(A, I)" is performed for all the pixels of the image data, and the value of I is changed according to whether the pixel belongs to the face region or the background region. Some types of the target tone include effect processing on which the conversion intensity I is not reflected.

The above snapshot-to-painting conversion can be processing in which the conversion intensity for each region shown in the face region map 306 is reflected on an α value (transmission information of each pixel, which is different from color expression data R, G, and B) which forms an α map which is publicly known (see Jpn. Pat. Appln. KOKAI Publication No. 2002-325171 and Jpn. Pat. Appln. KOKAI Publication No.

2009-237927), and α blending is performed for a converted image temporarily obtained by snapshot-to-painting conversion with a conversion algorithm according to the tone and the original image.

FIG. 15D is a diagram which corresponds to FIG. 15C and schematically illustrates the contents of processing of snapshot-to-painting conversion by α blending.

Snapshot-to-painting conversion by α blending is indicated by the following expression, when the original pixel value is A, the converted pixel value is B, and each pixel value of the α map is α (0.0 to 1.0):

$$B = \alpha \times A + (1.0 - \alpha) \times f(A)$$

Therefore, for example, when a converted image is superposed on and blended with the original image, a degree of expressing the original image through the converted image can be increased in the face regions (sq1, sq2, and sq3 in FIG. 14B), by increasing the α value of pixels in the face regions having low conversion intensity, and decreasing the α value of pixels in the background region having high conversion intensity. Specifically, it is possible to reduce a difference of the face regions from the original image and increase a difference of the background region from the original image, in the painting image which is obtained in the end.

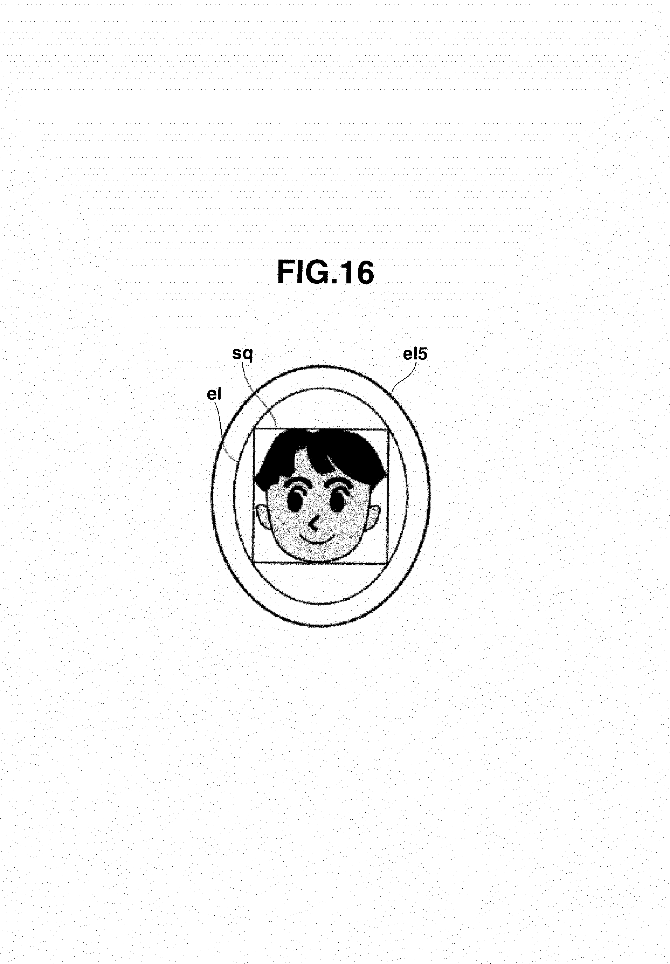

FIG. 16 illustrates a state where a region (boundary region) of an outline part of the face region sq is further divided. For example, when conversion intensity is varied between the inside and the outside of the outline of the face region "sq", a difference in level in which a difference in atmosphere is evident may be generated in the painting image. Therefore, an oval region "el" as illustrated in FIG. 16 may be set outside the face region "sq", an oval region "e15" which encloses the region el and a size larger than the region "el" may be set outside the region "el", and the conversion intensities of the regions "sq", "el", and "e15" may have the relation "sq>el>e15". The same is applicable to the case where more detailed snapshot-to-painting conversion is performed for the face region "sq" than that for the background region. Thereby, the outline part of the face can be subjected to snapshot-to-painting conversion in stages to have natural impression.

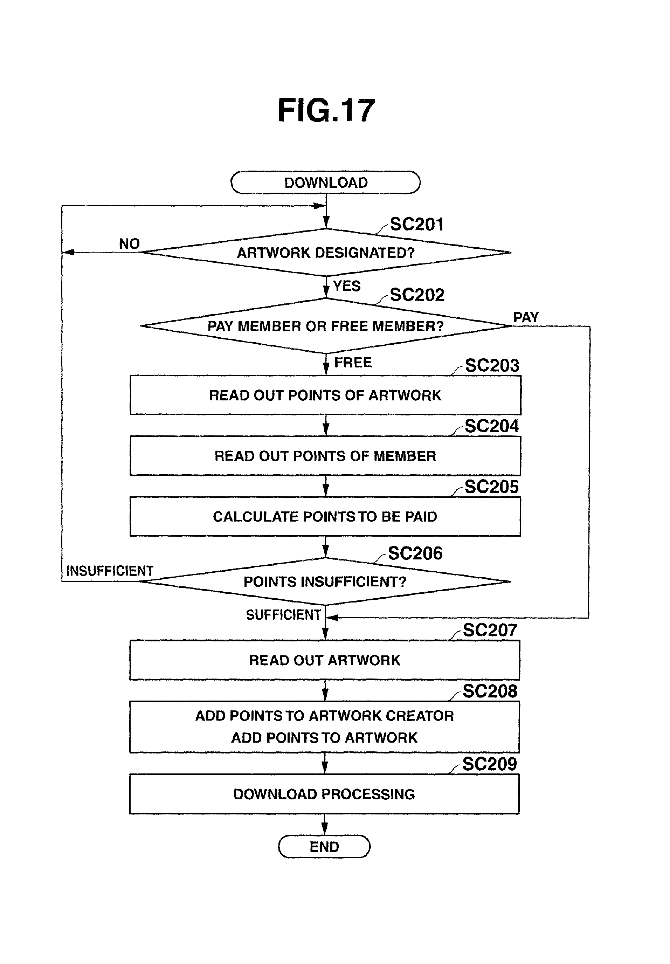

In the service site 10 of the present embodiment, download is performed as illustrated in FIG. 17. Member registration is required for performing download in the site.

FIG. 17 is a flow chart showing processing concerning a download of an artwork on the server 11. The processing in FIG. 17 is performed by the CPU 20 of the server 11, the evaluation controller 310, and the membership management unit 312.

If the artwork desired by a member to download is specified on the server 11 (step SC201), the membership management unit 312 determines whether the user is a pay member (here, an ordinary pay member or a premium member) or a free member (step SC202). If the user is a pay member, immediately proceeds to step SC207 described later.

On the other hand, the user is a free member, the membership management unit 312 reads the point corresponding to the evaluation of the artwork from the attribute information 206 of the artwork (step SC203) and also reads the point held by the member who is about to download from the attribute information thereof (step SC204).

Next, the membership management unit 312 calculates a payment point from the balance of the point (corresponding to the evaluation) of the artwork and the point held by the member (step SC205). If the payment point is sufficient, the membership management unit 312 proceeds to step SC207. But if the payment point is insufficient, the artwork cannot be downloaded and the membership management unit 312 returns to step SC201 to cause the user to select another artwork.

Then, on the server 11, the CPU 20 reads the artwork specified by the user from the artwork memory 108 of another user who is the creator of the artwork (step SC207) and the evaluation controller 310 adds up a point to each of the creator of the artwork and the artwork (step SC208). That is, things are arranged for members (free members, pay members, and premium members) so that the evaluation of artworks rises with an increasing number of downloads of members' artworks and also a point is added to the point area in the attribute information of the user ID 206 of the member who is the creator, which increases the points held by the member.

Then, on the server 11, the CPU 20 performs download processing that stores the artwork read in step SC207 in the downloaded artwork memory 110 of the user who has requested the download thereof (step SC209) .

Since the image service cite 10 has a social network service function, the user can add comments in an artwork of other users, reply to the comments, form a group with users having similar preference, or form an association of a particular artiest. These functions are well-known in the current SNS so that detailed description is omitted. The membership management unit 312 controls the SNS function as well as the membership management.

According to the present embodiment described above, it is possible to ideally perform snapshot-to-painting conversion for aim image including a person. Different conversion intensities are used for the face region and parts other than the face, thereby unnaturalness of the whole painting image is removed, and snapshot-to-painting conversion which produces natural appearance of faces can be realized.

**Claims**

1. An image processing apparatus connectable to a terminal (1-1, 1-2, 1-3) through a network (500), **characterized by** comprising:

   receiver means (40) for receiving original image data uploaded from the terminal (1-1, 1-2, 1-3);
   image processor means (302) for changing a tone of the original image data;
   transmitter means (40) for transmitting tone-changed image data output from the image processor means (302) to the terminal (1-1, 1-2, 1-3); and
   face detector means (314) for detecting a face region in the original image data received by the receiver (83),
   wherein the image processor means (302) is configured to perform a first tone-change for image data of the face region in the original image data, and perform a second tone-change for image data of another region in the original image data.

2. An image processing apparatus **characterized by** comprising:

   designating means (88) for designating a tone;
   image processor means (302) for changing a tone of original image data into the tone designated by the designating means (88); and
   face detector means (314) for detecting a face region in the original image data,
   wherein the image processor means (302) is configured to perform a first tone-change for image data of the face region in the original image data, and perform a second tone-change for image data of another region in the original image data.

3. The image processing apparatus of claim 2, **characterized in that**
   the first tone-change and the second tone-change are different in change intensity of the tone for the original image data.

4. The image processing apparatus of claim 2, **characterized in that**
   the first tone-change and the second tone-change are different in fineness of tone-change.

5. The image processing apparatus of claim 2, **characterized in that**
   a difference between the tone-changed image data obtained by the first tone-change and the original image data is smaller than a difference between the tone-changed image data obtained by the second tone-change and the original image data.

**6.** The image processing apparatus of claim 2, **characterized in that**
the detector means (314) is configured to detect a rectangular or oval face region.

**7.** The image processing apparatus of claim 6, **characterized in that**
the face region comprises a region including a face, and a boundary region enclosing the region including the face.

**8.** The image processing apparatus of claim 7, **characterized in that**
the image processor means (302) is configured to perform a third tone-change which is different from the first tone-change and the second tone-change, for image data of the boundary region.

**9.** The image processing apparatus of claim 8, **characterized in that**
the first tone-change, the second tone-change, and the third tone-change are different in an intensity of tone-change.

**10.** The image processing apparatus of claim 2, **characterized in that**
tone-change by the image processor means (302) comprises converting the original image data into painting image data which exhibits a pictorial tone.

**11.** The image processing apparatus of claim 10, **characterized in that** the second tone-change comprises changing the original image data into the painting image data which exhibits the pictorial tone, with an intensity that is higher than an intensity of the first tone-change.

**12.** The image processing apparatus of claim 2, **characterized in that**
the face detector means (314) is configured to detect a face of a person in the original image data.

**13.** The image processing apparatus of claim 2, **characterized in that**
tone-changed image data which is output from the image processor means (302) is transmitted to a printer (12).

**14.** An image processing method **characterized by** comprising:

receiving original image data uploaded from a terminal (1-1, 1-2, 1-3) through a network (500);
detecting a face region in the original image data;
changing a tone of the original image data, by performing a first tone-change for image data of the face region in the original image data and performing a second tone-change for image data of another region in the original image data; and
transmitting tone-changed image data to the terminal (1-1, 1-2, 1-3).

**15.** The image processing method of claim 14, **characterized in that**
the first tone-change and the second tone-change are different in change intensity of the tone for the original image data.

**16.** The image processing method of claim 15, **characterized in that**
the changing the tone of the original image data comprises converting the original image data into painting image data which exhibits a pictorial tone.

**17.** A non-transitory computer-readable storage medium having stored thereon a computer program which is executable by a computer of a server (11) connectable to a terminal (1-1, 1-2, 1-3) through a network (500), the computer program **characterized by** comprising instructions capable of causing the computer to execute functions of:

receiving original image data uploaded from the terminal (1-1, 1-2, 1-3) through the network (500);
detecting a face region in the original image data;
changing a tone of the original image data, by performing a first tone-change for image data of the face region in the original image data and performing a second tone-change for image data of another region in the original image data; and
transmitting tone-changed image data to the terminal (1-1, 1-2, 1-3).

**18.** A non-transitory computer-readable storage medium having stored thereon a computer program which is executable by a computer of a terminal (1-1, 1-2, 1-3) connectable to a server (11) through a network (500), the server detecting a face region in original image data, changing a tone of the original image data by performing a first tone-change for image data of the face region in the original image data and performing a second tone-change for image data of another region in the original image data, the computer program **characterized by** comprising instructions capable of causing the computer to execute functions of:

transmitting the original image data to the server (11);
designating a type of a tone, into which the original image data is to be converted, for the server (11);

receiving tone-changed image data, which is converted to the tone of the designated type, from the server (11); and

displaying the received tone-changed image data.

**19.** An image processing system **characterized by** comprising a terminal (1-1, 1-2, 1-3) and a server (11) which are connectable through a network (500), the server (11) comprising:

receiver means (40) for receiving original image data uploaded from the terminal (1-1, 1-2, 1-3);

image processor means (302) for changing a tone of the original image data into a tone designated by the terminal (1-1, 1-2, 1-3);

transmitter means (40) for transmitting tone-changed image data outputted from the image processor means (302) to the terminal (1-1, 1-2, 1-3); and

face detector means (314) for detecting a face region in the original image data, and wherein the image processor means (302) is configured to perform a first tone-change for image data of the face region in the original image data and a second tone-change for image data of another region in the original image data,

the terminal (1-1, 1-2, 1-3) comprising:

means (81) for obtaining the original image data; means (82) for transmitting the original image data to the server (11);

tone designating means (88) designating a tone, to which the original image data is to be converted, for the server (11);

receiver means (83) for receiving tone-changed image data, which is obtained by converting the original image data into the tone designated by the tone designating means (88), from the server (11); and

means (84) for displaying the tone-changed image data received by the receiver means (83).

# FIG.1

```
                        ┌──────────┐ 1-2
                        │ TERMINAL │
                        └──────────┘
                              ↕
                                    500
    1-1                  ╭─────────────╮                    1-3
┌──────────┐            │             │              ┌──────────┐
│ TERMINAL │ ←───────→ │  INTERNET   │ ←───────→    │ TERMINAL │
└──────────┘            ╰─────────────╯              └──────────┘
                              ↕
                                    10
              ┌──────────────────────────┐
              │ IMAGE SERVICE SITE        │
              │  ┌────────────────┐       │
              │  │    SERVER      │───11   │
              │  └────────────────┘       │
              │  ┌────────────────┐       │
              │  │    PRINTER     │───12   │
              │  └────────────────┘       │
              └──────────────────────────┘
```

# FIG.2

# FIG.3

1-1

| | | |
|---|---|---|
| 81 | 82 | 83 |
| CAMERA | TRANSMITTER | RECEIVER |

84

DISPLAY

85

STORAGE MODULE

86

DISPLAY CONTROLLER

87

COMMUNICATION CONTROLLER

88

OPERATION CONTROLLER

# FIG.4

| | | | |
|---|---|---|---|
| **801a** OIL PAINTING | **801b** IMPASTO | **801c** GOTHIC OIL PAINTING | **801d** FAUVIST OIL PAINTING |
| **801e** WATERCOLOR | **801f** GOUACHE | **801g** PASTEL | **801h** COLOR PENCIL |
| **801i** POINTILLISM | **801j** SILK SCREEN | **801k** DRAWING | **801l** AIRBRUSH |

84a

801

1-1

# FIG.5

**11**

**200 COMMON AREA**

**202 ARTWORK AREA**

| 204 IMAGE ID | 208 |
| 206 ATTRIBUTE INFORMATION | IMAGE DATA |

| 204 IMAGE ID | 208 |
| 206 ATTRIBUTE INFORMATION | IMAGE DATA |

**100 MEMBER AREA**

| 102 USER ID | 104 ATTRIBUTE INFORMATION |

106 UPLOADED IMAGE BUFFER

108 ARTWORK BUFFER

110 DOWNLOADED WORK BUFFER

**300 CONTROL AREA**

316 PRINT CONTROLLER

302 SNAPSHOT-TO-PAINTING CONVERSION PROCESSOR

304 PARAMETER TABLE

40 COMMUNICATION UNIT

306 FACE REGION MAP

308 DISPLAY CONTROLLER

20 CPU

22

310 EVALUATION CONTROLLER

312 MEMBERSHIP MANAGEMENT UNIT

30 DISPLAY BUFFER

314 FACE DETECTOR

# FIG.6

102                                          104

| USER ID | ATTRIBUTE INFORMATION |
|---------|------------------------|
|         | NAME |
|         | HANDLE NAME |
|         | GENDER |
|         | AGE |
|         | AREA |
|         | MEMBERSHIP TYPE (FREE/PAY/PREMIUM) |
|         | OTHERS |

# FIG.7

|  | 204 | 206 |
|---|---|---|

| IMAGE ID | ATTRIBUTE INFORMATION |
|---|---|
|  | USER ID |
|  | DATE |
|  | SIZE |
|  | IMAGE TYPE |
|  | NUMBER OF ACCESSES |
|  | NUMBER OF DOWNLOADS |
|  | POINT |
|  | OTHERS |
|  | IMAGE DATA ~208 |

# FIG.8

OTHER USER      MEMBER TERMINAL      SERVER

SB1 — | REQUEST TO CONNECT TO SERVER |

SC1 — | AUTHENTICATE MEMBER ID |

SC2 — | TRANSMIT MEMBER PAGE |

SB2 — | UPLOAD IMAGE |

SB3 — | REQUEST SNAPSHOT-TO-PAINTING CONVERSION |

SC3 — | SNAPSHOT-TO-PAINTING CONVERSION |

SB4 — | REQUEST PRINTING |

SC4 — | PRINT |

SA1 — | ACCESS SITE |

SB5 — | POST |

SC5 — | DISPLAY LIST OF ARTWORKS |

SA2 — | REQUEST VIEWING |

SB6 — | REQUEST VIEWING |

SC6 — | DISPLAY ORIGINAL IMAGE |

SA3 — | GOOD |

SB7 — | GOOD/COMMENT |

SC7 — | ADD POINT TO ARTWORK |

SB8 — | REQUEST DOWNLOAD |

SC8 — | ALLOW DOWNLOAD |

SB9 — | DOWNLOAD |

SC9 — | ADD POINT TO ARTWORK |

# FIG.9

```
      ( SNAPSHOT-TO-PAINTING CONVERSION )
                      │
                      │            ⌐SC101
      ┌───────────────▼───────────────────┐
      │  PREPROCESSING (COMMON PROCESSING) │
      └───────────────┬───────────────────┘
                      │            ⌐SC102
      ┌───────────────▼───────────────────┐
      │            DETECT FACE             │
      └───────────────┬───────────────────┘
                      │
```

OIL PAINTING          SELECT TONE?   SC103          OTHER

PASTEL

SC109   SC104   SC107   SC110   SC105   SC108   SC106

| FACE REGION MAP | OIL-PAINTING CONVERSION FOR DISPLAYED IMAGE | OBTAIN PARAMETERS | FACE REGION MAP | PASTEL CONVERSION FOR DISPLAYED IMAGE | OBTAIN PARAMETERS | OTHER CONVERSION |

SC112

DETERMINE?          NO

SC114          YES   SC113          SC115

| FACE REGION MAP | CONVERSION FOR ORIGINAL IMAGE BY DETERMINED CONVERSION ALGORITHM | OBTAIN PARAMETERS |

SC116

AFTER-PROCESSING

( END )

EP 2 506 552 A1

# FIG.10A

| A1 | A2 | A3 |
|----|----|----|
| A4 | A5 | A6 |
| A7 | A8 | A9 |

# FIG.10B

| A1 | A2 | A3 |
|----|----|----|
| A4 | A5 | A6 |
| A7 | A8 | A9 |

# FIG.10C

| A1 | A2 | A3 |
|----|----|----|
| A4 | A5 | A6 |
| A7 | A8 | A9 |

# FIG.10D

| | | | | |
|---|---|---|---|---|
| | A1 | A2 | A3 | |
| | A4 | A5 | A6 | |
| | A7 | A8 | A9 | |
| | | | | |

# FIG.10E

| | | | | |
|---|---|---|---|---|
| | A1 | A2 | A3 | |
| | A4 | A5 | A6 | |
| | A7 | A8 | A9 | |
| | | | | |

# FIG.11A

# FIG.11B

# FIG.12

```
        ┌─────────┐
        │  START  │
        └─────────┘
             │
             ▼           ╱SC151
  ┌──────────────────────┐
  │    ANALYZE IMAGE     │
  └──────────────────────┘
             │
             ▼           ╱SC152
  ┌──────────────────────┐
  │  CREATE FACE REGION  │
  └──────────────────────┘
             │
             ▼           ╱SC153
  ┌──────────────────────┐
  │ CREATE FACE REGION MAP│
  └──────────────────────┘
             │
             ▼
        ┌─────────┐
        │   END   │
        └─────────┘
```

# FIG.13

sq
el
F1

**FIG.14A**

F3 F2 F1

**FIG.14B**

sq3 sq2 sq1

**FIG.15A** ORIGINAL IMAGE DATA → [EFFECT 1] → [EFFECT 2] → [EFFECT 3] - - - - → [EFFECT N] → CONVERTED IMAGE DATA

f

**FIG.15B** ORIGINAL IMAGE DATA → [EFFECT 1] → [EFFECT 7] → [EFFECT 9] - - - - → [EFFECT M] → CONVERTED IMAGE DATA

f

**FIG.15C** ORIGINAL IMAGE DATA → [EFFECT 1] → [EFFECT 7] → [EFFECT 9] - - - - → [EFFECT M] → CONVERTED IMAGE DATA

f

[FACE REGION MAP]

**FIG.15D** ORIGINAL IMAGE DATA → [EFFECT 1] → [EFFECT 7] → [EFFECT 9] - - - - → [EFFECT M] → [α BLENDING] → CONVERTED IMAGE DATA

f

[FACE REGION MAP]

EP 2 506 552 A1

# FIG.16

# FIG.17

```
                    ┌─────────────────────┐
                    (      DOWNLOAD        )
                    └─────────────────────┘
                               │
                               ▼           SC201
      NO            ◇───────────────────────◇
◄──────────────────   ARTWORK DESIGNATED?
                      ◇───────────────────────◇
                               │ YES    SC202
                      ◇───────────────────────◇   PAY
                         PAY MEMBER OR FREE MEMBER?  ──────┐
                      ◇───────────────────────◇           │
                               │ FREE    SC203            │
                      ┌─────────────────────────┐         │
                      │ READ OUT POINTS OF ARTWORK│        │
                      └─────────────────────────┘         │
                               │         SC204            │
                      ┌─────────────────────────┐         │
                      │ READ OUT POINTS OF MEMBER │        │
                      └─────────────────────────┘         │
                               │         SC205            │
                      ┌─────────────────────────┐         │
                      │ CALCULATE POINTS TO BE PAID│       │
                      └─────────────────────────┘         │
                               │         SC206            │
  INSUFFICIENT       ◇───────────────────────◇           │
◄──────────────────   POINTS INSUFFICIENT?                │
                      ◇───────────────────────◇           │
                        SUFFICIENT │◄────────────────────┘
                               │         SC207
                      ┌─────────────────────────┐
                      │     READ OUT ARTWORK     │
                      └─────────────────────────┘
                               │         SC208
                      ┌─────────────────────────┐
                      │ ADD POINTS TO ARTWORK CREATOR│
                      │   ADD POINTS TO ARTWORK   │
                      └─────────────────────────┘
                               │         SC209
                      ┌─────────────────────────┐
                      │   DOWNLOAD PROCESSING    │
                      └─────────────────────────┘
                               │
                               ▼
                    ┌─────────────────────┐
                    (        END           )
                    └─────────────────────┘
```

28

**EP 2 506 552 A1**

Europäisches
Patentamt
European
Patent Office
Office européen
des brevets

**EUROPEAN SEARCH REPORT**

Application Number

EP 12 16 2314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/154762 A1 (CHOI YOON-SEOK [KR] ET AL) 18 June 2009 (2009-06-18) * paragraphs [0031] - [0043]; figures 1,3,4 * | 1-19 | INV. H04N1/00 G06T5/00 |
| X | WO 2010/138121 A1 (HEWLETT PACKARD DEVELOPMENT CO [US]; STAELIN CARL [IL]; CHEATLE PHIL []) 2 December 2010 (2010-12-02) * the whole document * | 1-19 | |
| Y | BROOKS S: "Mixed Media Painting and Portraiture", IEEE TRANSACTIONS ON VISUALIZATION AND COMPUTER GRAPHICS, IEEE SERVICE CENTER, LOS ALAMITOS, CA, US, vol. 13, no. 5, 1 September 2007 (2007-09-01), pages 1041-1054, XP011187644, ISSN: 1077-2626, DOI: 10.1109/TVCG.2007.1025 * the whole document * | 1-19 | |
| Y | BORRO D ET AL: "MobiPortrait: Automatic Portraits with Mobile Computing", DISTRIBUTED FRAMEWORKS FOR MULTIMEDIA APPLICATIONS, 2005. DFMA '05. FI RST INTERNATIONAL CONFERENCE ON BESONCON, FRANCE 06-09 FEB. 2005, PISCATAWAY, NJ, USA,IEEE, 6 February 2005 (2005-02-06), pages 340-345, XP010770179, DOI: 10.1109/DFMA.2005.36 ISBN: 978-0-7695-2273-9 * the whole document * | 1-19 | TECHNICAL FIELDS SEARCHED (IPC) H04N G06T |

-/--

The present search report has been drawn up for all claims

| Place of search | Date of completion of the search | Examiner |
|---|---|---|
| Berlin | 6 July 2012 | Exner, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

29

**EUROPEAN SEARCH REPORT**

Europäisches
Patentamt
European
Patent Office
Office européen
des brevets

Application Number

EP 12 16 2314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/071332 A2 (SEGMENTIS LTD [GB]; BANGHAM ANDREW [GB]) 12 September 2002 (2002-09-12) * pages 4-6; figures * ----- | 1,2,14, 17-19 | |

TECHNICAL FIELDS
SEARCHED        (IPC)

The present search report has been drawn up for all claims

| Place of search | Date of completion of the search | Examiner |
|---|---|---|
| Berlin | 6 July 2012 | Exner, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 2314

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2012

| Patent document cited in search report | | Publication date | Patent family member(s) | | Publication date |
|---|---|---|---|---|---|
| US 2009154762 | A1 | 18-06-2009 | KR  20090065354 A<br>US   2009154762 A1 | | 22-06-2009<br>18-06-2009 |
| WO 2010138121 | A1 | 02-12-2010 | EP     2435983 A1<br>US   2012093402 A1<br>WO   2010138121 A1 | | 04-04-2012<br>19-04-2012<br>02-12-2010 |
| WO 02071332 | A2 | 12-09-2002 | AU   2002236089 A1<br>EP    1374169 A2<br>US   2004130554 A1<br>WO    02071332 A2 | | 19-09-2002<br>02-01-2004<br>08-07-2004<br>12-09-2002 |

For more details about this annex : see Official Journal of the European Patent Office, No. 12/82

**EP 2 506 552 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8044867 A
- JP 2004213598 A
- JP 1046905 A
- JP 2011243187 A
- JP 2002325171 A
- JP 2009237927 A